# EUROPEAN PATENT APPLICATION

(11) **EP 1 245 990 A1**
(43) Date of publication of application: **02.10.2002**
(21) Application number: 01610037.2
(22) Date of filing: 28.03.2001
(51) Int. Cl.: G02B 27/22, H04N 13/00

(54) **Self alignment 3-D display**

(71) Applicant: Dimensional Developments ApS, 2800 Lyngby (DK)
(72) Inventor: Iversen, Steen Svendstorp, 2800 Lyngby (DK)
(74) Representative: Nielsen, Henrik Sten

(57) **Abstract**

A self alignment autostereoscopic display system (2) comprises an image generator (2), an optically addressed spatial light modulator (OASLM) (20), an infrared illumination system (12) and a refractive optical system (14). The image generator (2) generates a pair of orthogonally polarised images, the one image being vertically orientated with respect to its polarisation and the other image being horisontally orientated with respect to its polarisation. The images are transmitted from the image generator along respective optical paths towards the observers for the illumination of at least a left hand part and a right hand part including the left eye and the right eye, respectively, of the heads of the observers. The optically addressed spatial light modulator (OASLM) (20) includes a plurality of light transmission elements, each being individually optically addressable, and each having an optical input and an optical output and being shiftable between a V-state and a H-state in which V-state the transmission of vertically polarised light from the optical input to the optical output is allowed and the transmission of horisontally polarised light from the input to the output is inhibited or blocked, and in which H-state the transmission of horisontally polarised light from the optical input to the optical output is allowed and the transmission of vertically polarised light from the optical input to the optical output is inhibited or blocked. Each of the light transmission elements has an optical sensor for the shifting between the V- and H-states through exposure to light or infrared radiation (IR). The OASLM is positioned in the optical paths from the image generator to the observers. The infrared illumination system (IR) illuminate the observers for illumination of at least the left hand part or the right hand part of the head of each of the observers and in doing so, exposing a first part of the optical sensors of the plurality of light transmission elements of the OASLM to infrared radiation reflected from the left hand part or the right hand part of the head of the observers. The optical sensors of the first part shift their respective light transmission elements into allowing transmission of a first image of the pair of orthogonally polarised images and inhibiting or blocking for the transmission of the other or second image of the pair of orthogonal polarised images and the optical sensors not belonging to the first part shifting their respective light transmission elements into allowing transmission of the other or second image of the pair of orthogonally polarised images and inhibiting or blocking for the transmission of the first image of the pair of orthogonal polarised images through the remaining light transmission elements. The refractive optical system (14) includes at least one refractive optical element position in front of the OASLM between the OASLM and the observers for establishing the optical parts.

## Description

Stereoscopic displays are based on presenting one image to the right eye and another image to the left eye, the images being two slightly shifted viewpoints of the same object or scene, a left eye view and a right eye view.

In a conventional stereoscopic display system, an observer wears glasses for separating right and left images displayed. Autostereoscopic displays lets an observer observe stereoscopic images without the need to wear glasses.

Autostereoscopic displays provides separate images for each eye by employing directional displays, transmitting or reflecting different viewpoint images in different directions, so that the right eye of an observer will observe one viewpoint image, the left eye another viewpoint image. From each pixel of such a display, the right eye will receive light of a specific intensity and a specific color composition and the left eye will receive light of a different intensity and a different color composition.

Directional displays have been made using mechanical parallax barriers and optical parallax barriers such as lenticular sheets, lens arrays and spatial light modulators.

Autostereoscopic displays generally falls in two categories: multi parallax and dual parallax.

Multi parallax displays employs a plurality of images taken from different viewpoints, and the display emits these images succesively in succesive directions, so that at any position within the viewing area, an observer will receive two images of shifted viewpoints with right and left eye respectively. Multi parallax displays have the advantage of look-around ability, an observer may move around an object, which will appear steady in space. Multi parallax images are complex to record or synthesize, and requires high bandwidth for transmission and requires very high resolution of the display to produce reasonable observed resolution. Examples of multiparallax displays are holograms and multi-parallax lenticular displays.

Dual parallax displays use only two viewpoints. These do not provide for look-around capability, which is, however, in many applications not of a big concern. Images for dual parallax displays are easier produced and transmitted, and only require double the resolution of a display as compared to a monoscopic image of the same observed resolution. Some dual parallax material already exists, such as 3-D pictures, 3-D movies etc. Dual parallax autostereoscopic displays may further be divided into two categories: fixed barrier displays and observer tracking displays.

Fixed barrier displays suffer from the drawback, that they can only be viewed comfortably by one or a few observers from a limited number of locations, because the observers must align themselves with the fixed barriers, so the left and right eye are correctly receiving the respective images, otherwise a "pseudoscopic" image of reversed left and right images is observed.

One kind of observer tracking displays overcome this by tracking the head position of the observers, and adapting the parallax barrier to the tracking information. Reference is made to US Patent 6,008,484 which is hereby incoprorated in the present specification by reference.

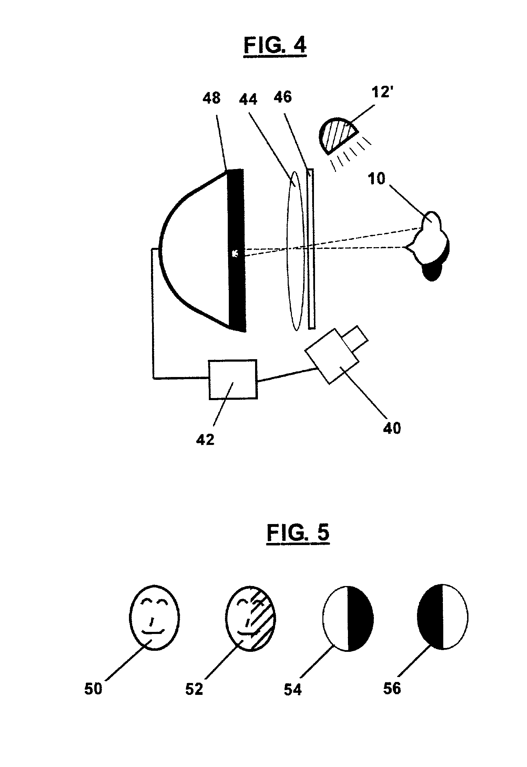

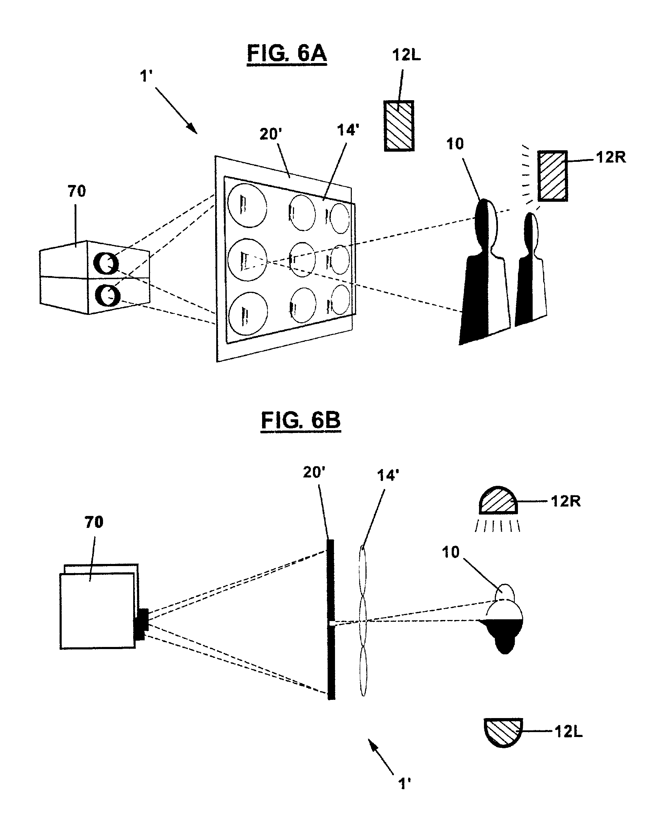

Another approach is to display alternating patterns based on a synthesized image calculated from an image captured of the observers with an infrared videocamera on a monochrome display, acting as back illumination of a transparent type LCD display panel with a large lens element disposed therein between, so that emitted light from the alternating patterns will emit in the directions of the observers left and right eyes alternatingly, synchronized with the left and right images being displayed on the Icd panel alternatingly, in a time-division manner. Fig. 5 illustrates such an arrangement. 1 denotes an observer, 2 denotes an infrared illumination source, 3 denotes an infrared tv camera, 4 denotes an image processing system, 5 denotes a monochrome display used as back illumination, 6 denotes a very large convex lens and 7 denotes a transparent color Icd display. Fig. 6 illustrates captured and synthesized images. 1 denotes an image of the observer captured in essentially frontal illumination, 2 denotes an image of the observer captured with illumination from the observer's right, 3 denotes a synthesized binary left half image and 4 denotes a synthesized binary left half image. Reference is made to US Patents 5,568,314 and 6,069,649, which are hereby incorporated in the present specification by reference.

Such a system may provide a high degree of freedom for a number of simultaneous observers, but is limited in size, and hard to make slim, and further it is applicable only to a limited range of display types, therefore not being able to take advantage of recent developments in display technology, such as for example flat-screen plasma displays.

An object of the invention is to overcome the above mentioned problems in prior art relating to either the need to wear glasses, to the complexity of producing and transmitting images, to the limitations in viewing angles and number of observers, to the ability to scale to big size displays and take advantage of a wide range of existing and evolving display technologies, including flat panel systems and electronic projection systems.

Another object of the invention is to produce an autosterescopic rear projection screen for operation with a projector, or a pair of projectors, capable of projecting polarised, spatially or temporally multiplexed moving or still sterescopic image pairs, the projectors being of a wide range of types

A third object of the invention is to produce an autosterescopic display overlay screen, which can be overlayed on a display capable of displaying polarised, spatially or temporally multiplexed moving or still sterescopic image pairs, the display being of a wide range of types.

The above objects together with numerous other objects, advantages and features which will be evident from the below detailed description of presently prefered embodiments of the autostereoscopic display system according to the present invention is obtained by an autostereoscopic display system, comprising:
i) image generating means for the generation of a pair of orthogonally polarised images, the one image being vertically orientated with respect to its polarisation and the other image being horisontally orientated with respect to its polarisation, said images being transmitted from said image generating means along respective optical paths towards one or more observers for the illumination of at least a left hand part and a right hand part including the left eye and the right eye, respectively, of the head or heads of said one or more observer,
ii) an optically addressed spatial light modulator (OASLM) including a plurality of light transmission elements, each being individualy optically addressable, and each having an optical input and an optical output and being shiftable between a V-state and a H-state in which V-state the transmission of vertically polarised light from said optical input to said optical output is allowed and the transmission of horisontally polarised light from said input to said output is inhibited or blocked, and in which H-state the transmission of horisontally polarised light from said optical input to said optical output is allowed and the transmission of vertically polarised light from said optical input to said optical output is inhibited or blocked, each of said light transmission elements having an optical sensor for the shifting between said V-and H-states through exposure to light or, preferably, infrared radiation (IR), said OASLM being positioned in said optical paths from said image generating means to said one or more observers,
iii) an infrared illumination system for illuminating said one or more observers for illumination of at least the left hand part or the right hand part of the head of each of said one or more observers and in doing so, exposing a first part of said optical sensors of said plurality of light transmission elements of said OASLM to infrared radiation reflected from the left hand part or the right hand part of the head of each of said one or more observers, said optical sensors of said first part shifting their respective light transmission elements into allowing transmission of a first image of said pair of orthogonally polarised images and inhibiting or blocking for the transmission of the other or second image of said pair of orthogonal polarised images and said optical sensors not belonging to said first part shifting their respective light transmission elements into allowing transmission of the other or second image of said pair of orthogonally polarised images and inhibiting or blocking for the transmission of the first image of said pair of orthogonal polarised images through said remaining light transmission elements, and
iv) a refractive optical system, including at least one refractive optical element position in front of said OASLM between said OASLM and said one or more observers for establishing said optical parts.

According to the basic teachings according to the present invention, the optical controlling and shifting of the light transmitting elements of the OASLM allows for the utilisation of the OASLM technique for providing an optically self-aligning and self-adjusting autostereoscopic 3-D display system, as the optically addressable and shiftable light transmitting elements of the OASLM may be addressed individually through the reflection of infrared radiation from a half part of the heads of the observers or a single head of a single observer since, based on the teachings of the present invention, the retransmission, so to say, of the reflected infrared radiation from the one half part of the head or the heads of the one observer or alternatively the observers, establishes a specific addressing of those light transmitting elements positioned in the intentional light transmission path from the one image generating means to be used for illuminating the one eye of the observer or the observers of the half part of the observer or of the heads of the observers, which half part is exposed to the IR illumination.

The at least one refractive optical element positioned or located in front of the OASLM between the OASLM and the observer or the observers or alternatively or preferably located juxtaposed in front of the OASLM provide directivity to light transmitted through the OASLM and provide focusing of the refractive light or the infrared radiation from the observer or the observers on to the OASLM.

In the presently preferred embodiment of the autostereoscopic display system according to the present invention, the at least one refractive optical element including a lens system, inlcuding at least one circular or cylindrical lens and/or including a multitude of refractive optical elements.

The OASLM is continously updated by patterns of reflections of the infrared illumination of the observers' faces, which are projected onto the OASLM, directly ors acting as "write-light", forming regions or "domains" of the OASLM, and the OASLM is capable of performing an at least essentially binary modulation in these domains, of the transmitted, visible "read-light" from the image generating means controlled by a thresholding function determining whether the received lights characteristics are mostly alike the right observer illumination's or the left observer illumination's characteristics, so that the transmitted, modulated visible light travel back the same path through the optical element, as the incident infrared light, that controlled it's modulation, towards the face of the observer or the faces of the observers.

According to alternative embodiments of the autostereoscopic display system according to the present invention, the OASLM being a structure including a plurality of discrete OASLM elements or alternatively being a continuous structure.

According to a preferred and advantageous embodiment of the autostereoscopic display system according to the present invention, the image generating means is controlled by a clock generator generating a blanking period in which the image generating means are turned off, the optical sensors of the OASLM are controlled by the clock and preferably enabled during the blanking period and disabled outside the blanking period, so that no shifting of the state of the light transmission elements may occur outside the blanking period, and the infrared illumination system is preferably controlled by the clock and turned on during the blanking period

The OASLM may, according to alternative embodiments of the autostereoscopic display system according to the present invention, the image generating means being constituted by a CRT (cathode ray tube)- an LCD (liquid crystal display)- a DLP (digital light processing) projector, a film or slide projector or alternatively a CRT-, an LCD- or plasma display.

In a preferred and advantageous embodiment of the autostereoscopic display system according to the present invention, the OASLM is located in front of a display capable of displaying a spatially modulated stereoscopic image pair, and the system further comprises a patterned polarizer with a pattern of areas of essentially orthogonal polarisation direction, located between the display and the OASLM, so that display pixels relating to a first image of the stereoscopic image pair are covered by areas of a first polarisation direction, and display pixels relating to a second image of the stereoscopic image pair are covered by areas of a second polarisation direction.

Optionally, a spacer may be provided, establishing a distance or spacing between the polariser and the OASLM. The spacer may be made from glass.

The pattern of the polariser may be a striped pattern.

Alternatively, the pattern of the polariser may be a checker-board pattern.

Further alternatively, the pattern of the polariser is of a different shape, adapted to the display.

Further alternatively, the OASLM is located in front of a display capable of displaying a time-division based stereoscopic image pair, and comprises a polarizer, located in front of the display, and a liquid crystal cell, capable of rotating the polarisation direction of transmitted light, located between the polarizer and the OASLM.

The above described at least one refractive optical system may, as pointed out above, comprise circular lenses, such as a micro lens array sheet.

Further alternatively, the layer of optical elements comprises cylindrical lenss, for example being a lenticular sheet.

In a particular advantageous embodiment of the display system according to the invention, a spacing element is included in a liquid crystal layer of the OASLM in the form of a film or plate with punched, etched or otherwise produced holes, the holes located so they are aligned with the centers of the optical elements of the optical layer, the holes being cylindrical or of any other shape.

In the preferred embodiment of the display system according to the invention, the left and right illuminations are differentiated simply by the presence or the absence of illumination, in other words one half part of the face or faces is infrared illuminated, the other or others are not. The thresholding function of the OASLM layer is thus an intensity thresholding, which most types of available OASLM's are capable of performing.

In an alternative embodiment of the display system according to the invention, the left and right illuminations are differentiated by having different peak wavelength. The thresholding function of the OASLM may in this case be based upon the intensity of light of a first wavelength subtracted the intensity of light of a second wavelength, such that for example reflections from the left illumination tends to pull a domain below the threshold, and reflections from the right illumination tends to pull a domain above the threshold. A wavelength sensitive asynchronous image subtracting OASLM has been demonstrated by Moddel et al., "Materials Research Society Symposium Proceedings", Volume 297, 1993.

In another alternative embodiment of the display system according to the invention, the two illuminations are differentiated by having different temporal modulation, for example square wave modulations having the same frequency but reversed phases, i.e. the left half part and the right half part are illuminated alternately, for example at a rate of 1000 Hz. In this example, a synchronous image subtracting OASLM may be used. Reference is made toobinson Optics Letters 15. jun 92.

One or more of these differentiation and thresholding techniques may be combined, to optimize differentiation and thresholding.

To reduce the unwanted interfering effect of light not originating from the illumination system acting as write-light on the OASLM, the following alternative or complementary interference reducing means may be provided:

The interference reducing means include the photodiode substrates being selected so as to reduce the sensitivity to visible light relative to the sensitivity to infrared light.

The interference reducing means include that ambient lighting is kept relatively low.

The interference reducing means include a display having blanking intervals, and an operating cycle of the OASLM is incorporated, so that the OASLM is essentially only sensitive to write-light during the displays' blanking period. This requires that the OASLM has a memory effect, so that the modulation pattern is maintained between the blanking intervals.

This memory effect is achieved using a twisted nematic liquid crystal OASLM and including a rectifying diode in the circuit, so that when the polarity of the operating voltage is negative, the diode is reverse biased, exhibiting a high impedance towards the liquid crystal layer, the discharge time due to the layers' internal RC time constant and the relaxation time of the liquid crystal molecules of domains in the "on" state, essentially causing the OASLM to maintain it's modulation pattern fixed in a short interval after the voltage was removed.

Alternatively, the memory effect is achieved by using bistable ferroelectric liquid crystals in the OASLM.

Further alternatively, the interference reducing means include a layer acting as a light valve, alternating between transparent and opaque, and synchronized with the operation cycle of the OASLM. The transparent and opaque intervals may be of different duration. The light valve may be a liquid crystal light valve.

Still further, the interference reducing means include the use of an OASLM comprising a patterned shading layer, making it essentially only sensitive to write-light incident from the front, thus insensitive to transmitted read-light from the back. Reference is made to US Patents 4,538,884 and 4,941,735, which are hereby incorporated in the present specification by reference.

The interference reducing means may further or alternatively include infrared blocking filter or filters, located in front of the image generating means.

Alternatively, the interference reducing means include a layer of infrared blocking filter included in the screen, located behind the electro-optical layer, or in front thereof.

Alternatively or additionally, the interference reducing means may include the OASLM being an asynchronous image subtracting OASLM, selectively updateable by write-light of different peak wavelengths.

In the alternative, the interference reducing means may include the OASLM being a synchronous or integrating, image subtracting OASLM, and operated so that any constant incident light is cancelled by alternating positive and negative update cycles.

In the following some alternative illumination systems are described. It is assumed, that the observer's face is directed towards the screen.

According to the teachings of the invention, a pair of essentially point-like light sources is provided, one located to the left and the other located to the right of a group of one or more observers located inbetween the light sources, illuminating the observer or observers from both sides, thereby illuminating the left half part with a left illumination and the right half part with a right illumination.

Alternatively, a pair of elongated, directional light sources is provided and located on both sides of the observers, for example located along the walls, illuminating the observers from the sides, thereby illuminating the left half part with a left illumination and the right half side part with a right illumination.

Further alternatively, several pairs of light sources are used, each located with one light source to the left of each observer or subgroup of observers and the other to the right of the observer or subgroup of observers.

Either the left or the right illumination sources of the above mentioned illumination systems may be eliminated, for illuminating only one half part of the face of the observer or the faces of the observers.

The illumination system may comprise one essentially point-like illumination source placed to the right of one or more observers, illuminating the observers from the right, thereby illuminating only the right half part of the face of the observers.

The light sources may, irrespective of its form comprise infrared LED arrays or infrared filtered halogen lamps, and they may be unfocused, focused or directional. They may be located close to or far from the obsevers, for example but not limited to: on the screen itself, in a sitting chair, on the walls, on the ceilings or on the back of one or more auditorium chairs in front of the observers.

Alternatively, one or more adaptive illumination systems may be provided, each comprising one or two infrared imaging projectors, located in front of the observers, for example on the screen itself, and an observer tracking system, which may also be located on the screen. The observer tracking system tracks the observers' head positions and produce one or more images, which are projected by the infrared imaging projectors onto the observers, so that the light incident on the observers' left half part face has a first set of characteristics and the light incident on the observers' right half part face has a second set of characteristics, different from the first set of characteristics.

The observer tracking information may be fed to an image processing system, which synthesises a binary image, in turn modulating the infrared imaging projectors, the binary image having a form, so that the projected images illuminate the left half side of the observers' faces with infrared light having a first set of characteristics and the right half side of the observers' faces with infrared light having a second set of characteristics, different from the first set of characteristics.

The illumination systems each comprise one infrared imaging projector, which projects the binary image, so that one half side of the observers' faces are illuminated with a high intensity and the other half side of the observers' faces are illuminated with a low intensity.

Alternatively, the illumination systems comprise two infrared imaging projectors which are alternately blanked, the first imaging projector projecting the binary image, so that the left half side of the observers' faces are illuminated with a high intensity and the right half side of the observers' faces are illuminated with a low intensity, the other projecting an intensity inversed version of the binary image, so that the left half side of the observers' faces are illuminated with a low intensity and the right half side of the observers' faces are illuminated with a high intensity, hence, the left half side and the right half side of the observers' faces are illuminated with high and low intensities alternately.

Further alternatively, the illumination systems each comprise one infrared imaging projector, which alternately projects a normal and an inversed version of the binary image, so the left half side and the right half side of the observers' faces are illuminated with high and low intensities of infrared light alternately.

The above mentioned imaging projector may comprise an optical system, a binary operated spatial light modulator, electrically, optically or otherwise addressed, and two infrared light sources, emitting infrared polarised light with essentially orthogonal polarisation directions, the two infrared light sources being illuminated alternately, thereby projecting normal and reversed images of the image on the spatial light modulator.

The observer tracking systems may further comprise an infrared camera for producing an infrared picture of the observers, for an image processing system to perform the observer tracking. Observer tracking comprising the use of image processing is well known in this and other arts. Reference is made to US Patents 6,069,649 which US Patent is further hereby incorporated in the present specification by reference.

The infrared camera of an observer tracking system may be sensitive to light of a second wavelength, different from the wavelength of the illumination systems, and of which the OASLM is insensitive. The camera may incorporate it's own infrared illumination source, selectively illuminating at this second wavelength. A filter layer may be included in the OASLM to exclude infrared light of second wavelength.

Alternatively, the infrared camera uses light at the same wavelength as the illumination systems, and may incorporate it's own pulsed or temporally modulated infrared illumination source, synchronized with an operating cycle of the OASLM, so as not to interfere with the desired function of the OASLM by acting as write-light. The camera's illumination source may be in it's light emitting state only during a dedicated time slot during the projector's blanking interval, or it may be in it's light emitting state only outside of the projector's blanking interval.

Further alternatively, the observer tracking camera uses the light of the normal and inversed versions of the binary image, alternately projected by the illumination systems' infrared imaging projectors.

The infrared camera's shutter may be open during two or more succesive alternations, performing a light integration resulting in an image of the observers illuminated by both binary infrared projected images thus essentially evenly illuminated, suitable for image processing.

Alternatively, the infrared cameras' shutter function may be synchronized with the phase of the alternation, so that the camera is capable of both capturing infrared images of the observers when illuminated by the normal binary image and when illuminated by the reversed binary image. A first captured infrared image of the observers when illuminated by the normal binary image and a second succedingly captured infrared image of the observers when illuminated by the inversed binary image may be combined by an image processing system to a differential image, each resulting pixel value given by the absolute value of the difference between the corresponding pixel values of the first captured image and the second captured image. Given a fast enough alternation rate between the normal and inversed binary projected images, the observers can be assumed not to move inbetween images, thus the differential image will be an evenly illuminated image of the observers, suitable for image processing.

Further, the first and second captured infrared image may be compared with the synthesized binary image by an image processing system for detection and correction or compensation of any alignment errors between the infrared camera and the infrared imaging projectors.

Corrections may be done either automatically or semi-automatically with the assistance of an operator, either physically, adjusting the camera's or projectors' position and directions or electronically.

Compensation may be performed automatically, having the image processing system maintaining parameters for the geometric transformation between captured and projected images.

An alternative application of the invention when incorporating observer tracking, is to display the same image to both eyes of the observers, but letting two different groups of observers observe two different images, based on some observer selection schedule.

Another alternative application of the invention when incorporating observer tracking, is to display one same image to both eyes of all observers and another image, which may be a blank image, to any recording device present, such as a camera.

### DESCRIPTION OF THE DRAWINGS

FIG. 1 is a plane view of the presently preferred exemplary embodiment of an autostereoscopic display element according to the present invention.
FIG. 2A is a plan view of the optically addressed spatial light modulator of the presently preferred exemplary embodiment of the autostereoscopic display element according to the present invention.
FIG. 2B is a front view of the optically addressed spatial light modulator of the presently preferred exemplary embodiment of the autostereoscopic display element according to the present invention.
FIG. 3 is a schematic diagram of the electrical connections of the presently preferred exemplary embodiment of the autostereoscopic display element according to the present invention.
FIG. 4 is a plan view of an example of a prior art autostereoscopic system.
FIG. 5 shows captured and synthesized images by an image processing based observer tracking system.
FIG. 6A is a perspective view of a first alternative embodiment of the autostereoscopic display element according to the present invention.
FIG. 6B is a top view of the arrangement shown in FIG. 7.
FIG. 7 is a perspective view of a second alternative embodiment of the autostereoscopic display element according to the present invention.
FIG. 8 is a plan view of a stripe patterned polarizer.
FIG. 9 is a cross section of an example of a standard reflecting OASLM.
FIG. 10 is a cross section of the OASLM used in the first and second alternative embodiment of the autostereoscopic display element according to the present invention.
FIG. 11 is a perspective view of a spacing element comprised by the liquid crystal layer of a first embodiment for maintaining an accurate spacing in large size screens.
FIG. 12 is a a top view of the illumination system of a second alternative embodiment.
FIG. 13 is a top view of an alternative illumination system as compared to the system shown in Fig. 12.
FIG. 14 is an example of an operating cycle.
FIG. 15 is an example of an operating cycle of the presently preferred exemplary embodiment of the autostereoscopic display element according to the present invention.

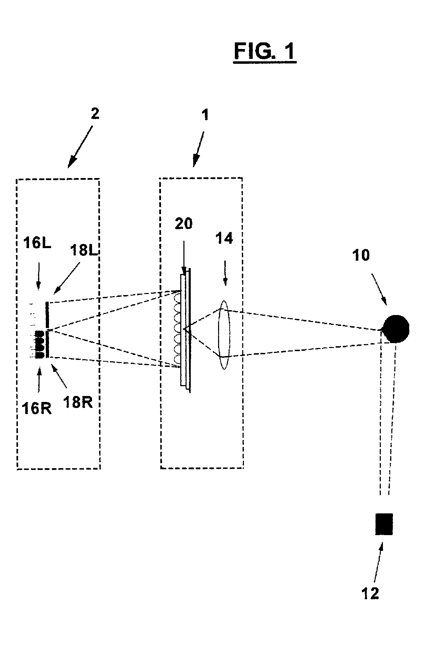

Figure 1 is an overall, plane view of an arrangement according to a presently preferred exemplary prototype embodiment of an autostereoscopic display element. This embodiment includes a display overlay screen comprising one single screen element, i.e. a low resolution version of the invention yet qualitatively similar to higher resolution versions, and a display including two pixels, i.e. a low resolution display yet qualitatively similar to higher resolution displays. The "images" constituting the stereoscopic image pair include one pixel each.

The arrangement allows a single observer or several observers to observe the pixel as having one color when watched with the left eye and another color when watched with the right eye, even when moving to a different position, without ever seeing a "pseudoscopic" image of reversed pixel colors, from any position.

A display 2 comprises two pixels, a left pixel 16L, showing a left "image", and a right pixel 16R, showing a right "image". The pixels consist of light emitting diodes, selected so that the left pixel 16L emits blue light and the right pixel 16R emits red light. The pixel values are thus "hard-wired" in this arrangement. The display has an operating cycle alternating between bright and blanking intervals, both pixels being switched off to a dark state in the blanking interval.

In front of the left pixel 16L a polarizer 18L of horisontal direction is located and in front of the pixel 16R a polarizer 18R of vertical polarisation direction is located. Thus horisontally polarized blue light from the pixel 16L and vertically polarized red light from the pixel 16R radiate towards a display overlay screen 1, including a liquid crystal optically addressed spatial light modulator (OASLM) 20.

The OASLM 20 includes seven discrete modulation segments, each being setable in a V-state or a H-state for the transmission of vertically polarised light or horisontally polarised light, respectively. The OASLM 20 has an operating cycle synchronised with the display 20. During the display 2's bright interval, the OASLM 20 is synchronised to transmit either vertically or horisontally polarised light from the pixels 16L and 16R depending on the setting of the individual segments of the OASLM 20, as the individual segment of the OASLM 20 transmits, during the display 2's bright interval, vertically polarised light provided the segment in question be set in the V-state or alternatively transmits horisontally polarised light provided the segment in question be set in the H-state. The setting of the individual segments of the OASLM 20 is performed during the blanking interval of the display 20 by means of incident light. The light being vertically polarised or alternatively horisontally polarised light transmitted through the individual segments of the OASLM is referred to as 'read'-light, whereas the light incident to the individual segments of the OASLM during the blanking interval for performing the setting in the V-state or alternatively the H-state of each of the segments of the OASLM is called 'write'-light. The setting of the individual segments of the OASLM performed during the blanking period of the display 20 is so to say stored by the OASLM 20 for the next bright interval for performing the transmission through the individual segments in accordance with the polarisation of the individual segments in the V-state or alternatively in the H-state.

In the absence of write-light, all segments of the OASLM 20 will be in their V-state, and the OASLM 20 will be transparent only to vertically polarized light, therefore only red light from pixel 16R will be transmitted through the OASLM 20. Provided all segments of the OASLM 20 be exposed to write-light, the segments will all be in the H-state and the OASLM 20 will be transparent only to horisontally polarised light, therefore only blue light from the pixel 16L will be transmitted through the OASLM 20.

A convex lens 14 is located in front of the OASLM, projecting an image of the surface of the OASLM towards an observer 12, located in front of the screen.

With each eye, the observer will observe a region of the surface of the OASLM, thus in the absence of write-light, the lens 14 will appear red to both eyes of the observer.

The observer 10 is now constantly illuminated by a left side face illumination from the left by a light bulb 12 in front of which is located an infrared transmitting filter 13, so that the left half side of the observer's face is illuminated by infrared light or radiation.

Infrared reflections off the left side illuminated face of the observer is radiated towards the screen and through the lens 14 project an infrared image of the observer's illuminated left half face, on the OASLM 20.

Each segment of the OASLM 20 includes an infrared light sensitive element, which alters the state of the segment to the H-state, when influenced by infrared light reflected from the observer's left half face. Therefore, one or more segment(s) covered by the projected infrared image of the observers left half face will change to it's H-state and become transparent to the horisontally polarized blue light from pixel 16L. The blue light will travel back towards the observer's left half side face, along the same optical path as the incident reflected infrared light or write-light that formed a projection of the left half face of the observer on the OASLM 20. Segment(s) in the dark or right half part of the projected face will remain unaffected, red light will still radiate towards the observer's right half face.

Thus, in the presence of a left side face illumination, the lens 14 appears blue to the observer's left eye and red to the observer's right eye.

This will remain true, even if the observer moves, as the infrared reflections will be incident upon another segment.

Provided the observer alternatively is illuminated from the right, the right eye will see the pixel as being blue and the left eye will see the pixel as being red.

Provided a plurality of autostereoscopic display elements are constructed and positioned side by side forming a pattern of pixels and screen elements, a higher resolution display fulfilling the object of the invention is realized.

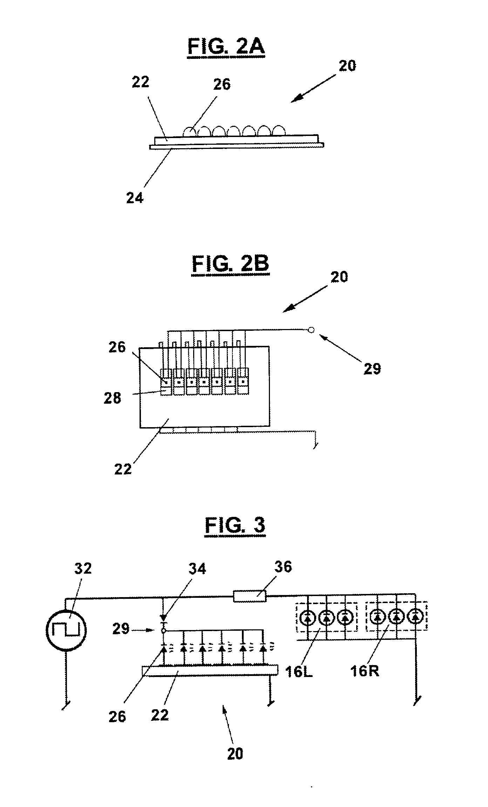

Fig. 2A and 2B are top and front views, respectively, of the OASLM 20 employed in the embodiment shown in Fig. 1 and constitutes a twisted nematic liquid crystal cell comprising liquid crystal elements contained within two glassplates. The one glassplate is coated on the inside with transparent conduction oxide electrodes 28, forming discrete segments each connected to a respective external terminal. The other glassplate is coated with transparent conductive oxide forming a common electode, connected to ground. On the front of the liquid crystal cell a polarising analyzer 24 of horisontal polarisational direction is located. On the back of the liquid crystal cell 22 infrared sensitive photodiodes 26 are located. Each photodiode has it's anode connected to the respective external terminal of the transparent conductive electrode positioned in front of it. The cathodes of all the photodiodes are connected to a common terminal 29 of the OASLM.

Fig. 3 is a schematic diagram of the connections in the arrangement. A square wave oscillator 32 is connected to the light emitting diodes of the two pixels 16L and 16R through a resistor 36, so that the diodes will only emit light during the oscillator's negative half wave periods. The oscillator is further connected to the common terminal of the OASLM 20 through a rectifying diode 34.

During positive half waves, the pixels are blanked and a positive voltage is applied to the OASLM 20's terminal 29; the photodiodes are biased in the reverse direction, and the voltage across the electrodes of each segment of the liquid crystal cell will depend on the impedance of the photodiodes 26, and hence of the light incident upon them. In effect, each photodiode and liquid crystal segment together constitutes a voltage divider, the voltage across the electrodes depending on the impedance match between the photodiode and the liquid crystals.

When in dark, the voltage across the electrodes of a segment are below the threshold of the so-called Freedericks transition, and the liquid crystal molecules are in their relaxation state, causing the polarisational direction of transmitted light to be approximately 90 degress. In this state, only light of vertical polarisational direction will be transmitted through the segment and analyzer arrangement, since the analyzer only transmits light of horisontal polarisation.

When infrared light of sufficient intensity is incident upon a photodiode from the front, it's impedance falls and the voltage across the segment in front of it raises to above the threshold of the Freedericks transition, the segment's liquid crystal molecules begin a transition, and after a transition time, which is shorter than the half wave period, the segment shifts from it's V-state to it's H-state. Consequently, by the end of the half wave period, the polarisational direction of the segment becomes approximately 0 degrees, thereby allowing only transmission of horisontal polarisation direction.

During a succesive positive half wave, the rectifying diode 34 will become biased in the reverse direction and the common terminal of the OASLM will be in a high impedance state. The segment's liquid crystal molecules will start a transition back to their relaxed state.

However, the relaxation time is substantially longer than the transition time from V-state to H-state. Consequently, it is possible to adjust the frequency of the square wave oscillator, so that a full transition from V-state to H-state can occur during a negative half wave, but very little change happens during the positive half wave, effectively maintaining the modulation pattern of the OASLM until the next negative half wave, during which the segments are again updated. If the write-light of a segment is removed, the segment will after several square wave periods eventually relax into it's V-state again.

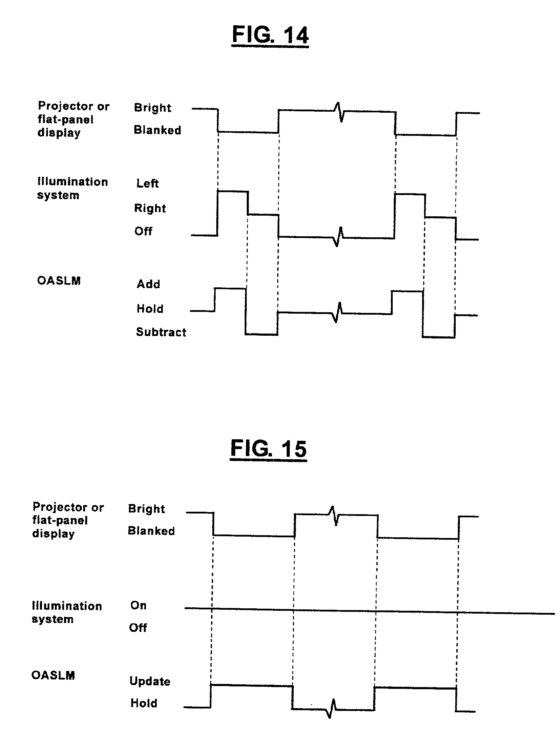

Hence, utilizing this phenomenon, a memory effect is achieved, which makes it possible to operate the OASLM 20 in a desired cycle of alternate "update" and "hold" intervals, preventing the OASLM 20 from being unintentionally updated by light from the pixels. This operating cycle is illustrated in fig. 15. Since commercially available infrared sensitive elements normally also have some sensitivity to visible light, the above described operational mode is. Another approach would be to cover the photodiodes completely from the display by a shading layer or by covering them by infrared filters, but this may not be practical or in some applications not possible.

The frequency of the square wave oscillator in the above described prototype embodiment was adjusted to approximately 5000 Hz, which produced the desired memory effect.

The pixel pair and screen element in the prototype embodiment is shielded by an enclosure, so light from other sources may not enter the arrangement and exit through the lens 14 towards the observer, influencing the observed color of the screen element. In arrangements with more pixels and screen elements for higher resolution displays, such shielding arrangements may be comprised to exclude light from neighbouring pixels, ensuring a clear and sharp image, or the display could be located close enough to the overlay screen to obtain proximity focusing.
Alternatively, one or more optical elements may be included to focus the light from the pixels onto the screen elements. These optical elements may be located behind the polarisers, so as not to change the light polarisation characteristics obtained by these.

A liquid crystall cell may rotate the polarisational direction of transmitted light differently dependent on the wavelength, which may cause pixel hue change and crosstalk between "images". Possible counteractions, including the insertion of an extra liquid crystal cell in the optical path, are well known, vide e.g. "Liquid Crystals", Peter J. Collins, Princeton University Press, New Jersey 1990, page 108. In the present prototype embodiment this problem turned out to be insignificant, however.

In the prototype embodiment, the OASLM 20 is characterized by being segmented and of low spatial resolution. By using an unsegmented OASLM or a segmented OASLM with higher resolution and preferrably a smaller spacing between segments, a higher degree of freedom of movement for the observer may be attained.

The photosensitive elements of the segments are not themselves transparent, but they are significantly smaller than the segments, and because a relatively large region around the observer's pupil, in fact half of the face, is illuminated, this presents no problem, unless the observer is positioned exactly so that the photosensitive elements blocks the path of transmitted light towards one or both of her eyes. To overcome this problem, the lens 14 may simply be adjusted a little out of focus, a diffusing layer incorporated in front of the OASLM or the lens may be made to blur the image slightly vertically only, in which direction less resolution is required. It is noted, that the adjustment of the focus of the lens has nothing to do with the observation of the (one-pixel) "image" as appearing in focus. The focus of the lens only relates to the precision and intensity thresholding in the mapping of read-light and write-light between the OASLM surface and the observer's face.

Fig. 6A and 6B illustrates a first alternative embodiment of the autostereoscopic display element according to the present invention. In this embodiment, the single screen element of the above described arrangement is scaled to a rear projection screen 1' with a plurality of screen elements, allowing observers in front of the screen to observe a rear projected stereo image pair.

A large transparent OASLM 20' comprising a diffusing layer designed for rear projection, is located behind a microlens array 14', here shown with exaggerated lens size and spacing for clarity. A pair 70 of gen-locked videprojectors project an image pair comprising a first horisontally polarized image and a second vertically polarized image onto the OASLM 20. An observer 10 is infrared illuminated by an illumination system comprising a left illumination 12L and a right illumination 12R, alternately illuminating the left and right half side face of the observer, with an alternation frequency of for example 1000 Hz.

Each lens element of the microlens array 14' and a region of the OASLM 20' layer operates as a screen element, similar to that of the above described prototype ambodiment. In this arrangement, the OASLM 20 is constructed with ferroelectric liquid crystals and a thin film photosensor layer, and is operated in an integrating, image subtracting mode, where positive and negative update patterns are integrated over time. Further, the ferroelectric liquid crystals posesses a true bistable nature, providing a desired memory effect with a "hold"-state, in which the OASLM 20 is insensitive to light and the modulation pattern is maintained.

The operation cycle of the OASLM and the illumination system are synchronized to one another, and they are also synchronized with the videprojector pair's blanking intervals. The operation cycle is illustrated in fig. 14.

Whenever the videprojectors are in their blanking interval, the OASLM update cycle begins, using reflections from the observer's alternatingly left-right infrared illuminated face. When the illumination system illuminates the observer's left half face, the OASLM performs a positive update, and when the illumination system illuminates the observer's right half face, the OASLM performs a negative update, and vice-versa. This operation mode improves control of the thresholding function and reduces interference from light from other sources than the illumination system, such as ambient room light, because these will normally be relatively constant, and therefore cancelled out by the alternating positive and negative updates. Further, dark-current noise in the diode structure will be reduced due to averaging with this operating cycle.

It is to be noted, though, that even if any constant lights will be cancelled out, strong constant lights may affect the desired sensitivity of the OASLM towards the alternated infrared light, because the OASLM is not a linear device, and may be driven to it's less sensitive operating condition. Therefore, it is still desirable to reduce strong constant lights, an obvious source being the projector pair. Therefore, when the videoprojectors are not in their blanking interval, the OASLM is put into a "hold"-mode, maintaining it's modulation pattern until the blanking interval and the next update cycle.

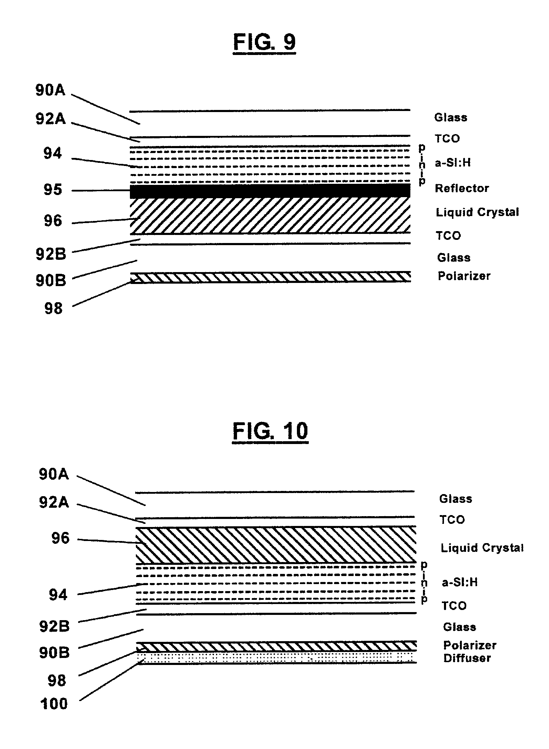

Fig. 9 shows an example of a standard OASLM. 96 is a ferroelectric liquid crystal layer, in which the molecules respond to the polarity of an imposed electric field, such that a positive polarity causes a transition to a state where the molecules rotates the polarisational direction of transmitted light approximately 90 degress, and a negative polarity causes a transition to a state where the molecules rotates the polarisational direction of transmitted light approximately 0 degress. The polarizer 98 transmits only light of horisontal direction. Therefore, when a positive voltage is supplied across a region of the liquid crystal layer, a transition of the molecules in the region to a V-state occurs, in which state only vertically polarized light is transmitted. A voltage of negative polarisation will similarly initiate a transition towards a H-state, in which state the region in question is only transparent to horisontally polarized light.

90A and 90B are bearing glassplates, each coated on the inside with a transparent electrode layer of conduction oxide, 92A and 92B, respectively. 94 is an amorphous silicon photosensitive layer, comprising a number of heterojunctions forming a back-to-back photodiode structure. This arrangement has been shown to provide high sensitivity and fast response (Robinson, Sharp Labs) and requires only a thin layer of a few micrometers, which is desirable to achieve good spatial resolution. Further, it can be produced with low temperature grown amorphous silicon, enabling manufacturing in large areas, as is known from e.g. solar cells. Resolutions of OASLM's with uniform photosensitive layers have been reported of up to at least 30 line pairs per millimeter, vide e.g. "Hydrogenated Amorphous Silicon Photosensor for Optically Addressed Spatial Light Moulators", IEEE Transactions on Electron Devices Vol. 36, No. 12, December 1989; "Thin Film Photosensor Design and Fabrication Issues for Liquid Crystal Spatial Light Modulators", SPIE Vol. 2022 Photodetectors and Power Meters, 1993, section 4.4. The resolution is primarily limited by charge diffusion in the photosensitive layer and being a trade-off between response time, sensitivity and resolution. In this respect, it is an advantage that fast response times may not be needed, since any movement of the observer's will be relatively slow.

95 is a dielectric reflector. When an adequate voltage is supplied to the electrodes, the impedance match between the photosensitive layer and the liquid crystals control the state of the liquid crystal. Therefore, in areas in which the photosensor is sufficiently illuminated, the photosensor exhibitis a high impedance and most of the voltage drop occurs across the liquid crystal, causing a transition to occur, whereas in dark areas, most of the voltage drop occurs across the photosensor and only a small electric field is present across the liquid crystal, which electric field is not sufficient to initiate a transition. Hence, charge patterns, or "domains", in the physically unpatterned OASLM control the modulation of transmitted light. Construction of thin films based OASLMs have been described in among others "Tradeoffs in the Design and Operation of Optically Addressed Spatial Light Modulators", SPIE Vol. 1562 Devices for Optical Processing, 1991; and US Patents 4,655,554 and 3,824,002. Reference is made to the above US Patents which are further hereby incorporated in the present specification by reference.

Integrating behaviour of ferroelectric liquid crystals has been demonstrated in among others: "Integrating Mode for an Optically Addressed Spatial Light Modulator", Applied Optics Vol. 32 No. 17, 10. June 1993. Several short pulses of positive voltage, each of a duration insufficent for a transition to occur, is integrated, so together they are capable of causing a transition. Short negative pulses inhibit this transition, or, if the transition has already ocurred, they will tend to initiate a transition to the other state. In short, an image subtracting operation is achieved, in which the time-integrated sum of positive and negative pulses controls the state of the liquid crystal molecules.

The OASLM used in the present arrangement is illustrated in Fig. 10, and is a slightly altered version of the standard image subtracting OASLM, in which the dielectric reflector stack, as shown in Fig. 9 is omitted and a diffusing layer 100 is added.

An integrating image subtracting behaviour may also be achieved using nematic liquid crystals, when operated with a high frequence square wave voltage. The crystals respond not to the polarity but to the rms value of a supplied voltage, but integrating and subtracting operation may be possible because of the build up time and discharge times of charges across the layer, defined by the OASLM's RC time constant due to it's internal capacitance and resistance. Likewise, a memory effect utilizing this time constant was utilized in the above described prototype embodiment.

The thresholding function of the OASLM and the illumination intensity may be adjusted, in order to achieve the desired binary pattern in the OASLM. Thresholding in the OASLM may be controlled by the magnitude, frequency and DC offset of the square wave operating voltage. Another approach, which allows for very precise control, is to include a third terminal in the OASLM, thereby allowing the construction of a voltage divider when further including an external resistor, which may be controlled very accurately. The third terminal may be a structured metal conductor, for example a grid or hole mask, vide e.g. "Dynamic Thresholding with the Three-terminal Optically Addressed Spatial Light Modulator", Material Research Society Symposium Proceedings Vol. 258, 1992. Such an arrangement may be advantagously combined with the above mentioned shading pattern. Still another approach may be to include discrete thin film structures exhibiting electrical characteristics, for example a non-linear diode structure or even an active structure, like a thin film transistor.

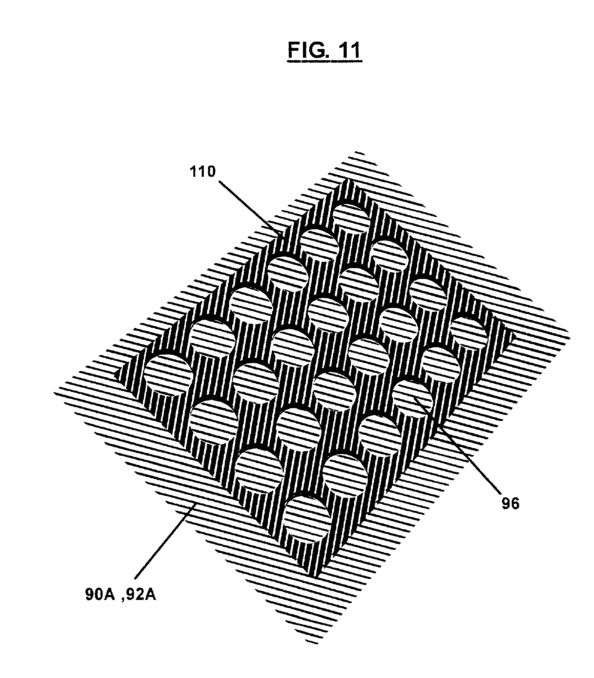

Constant and exact thickness of the liquid crystal layer is important to achieve the desired rotation of the polarisational direction of transmitted light. Normally, this thickness is controlled by edge spacers. According to the present invention, the area of the OASLM used by each lens element is a function of the desired maximum viewing angle and the refractive characteristics of the microlens array layer 14', which can be designed, so as to allow some unused area inbetween the used areas, giving room for a spacing structure within the layer of liquid crystals itself, thereby enabling good control of layer thickness even in extremely large constructions. The spacing structure may be a non-conducting grid or a thin polymer film with punched or otherwise produced holes, such as illustrated in fig. 11. 90A is the bearing glassplate coated with a transparent electrode layer 92A, 110 is the polymer film with holes, and 96 are the liquid crystals in the holes, forming the active regions of the OASLM, which must be aligned with the lens elements of the microlens array layer. The capillary forces are sufficient for keeping the construction together.

Additionally or alternatively, a similar but preferably thicker spacing structure may be inserted between the OASLM and the refractive optical system. This structure may also provide the desired effect of blocking light between screen elements, eliminating the problem of an observer, when moving outside the designed viewing angle, seeing light through a lens element of one screen element from the region of the OASLM layer of the neighbouring screen element. This will not in itslef lead to an incorrect perceived image, like the effect does in traditional displays, but it does incur a little risk of multiple different paths for infrared reflections from different observers to incide on the same spot, thereby resulting in an undesired modulation.

The use of a transparent, uniform photosensitive layer will introduce some absorption of the read-light, which may not be of uniform spectral distribution, and hence require a hue correction in the form of optical or electronic filters or adjustment of display or projection equipment. In order not to maximize read-light transmission, the thickness of the photosensitive layer may be reduced, thereby however also reducing the sensitivity. A tradeoff between infrared sensitivity and light gain therefore exists, which emphasizes the need to employ other techniques for improving signal-to-noise ratio, like e.g. the above mentioned image subtraction technique, the above described blanking interval synchronisation technique and the use of a shading layer.

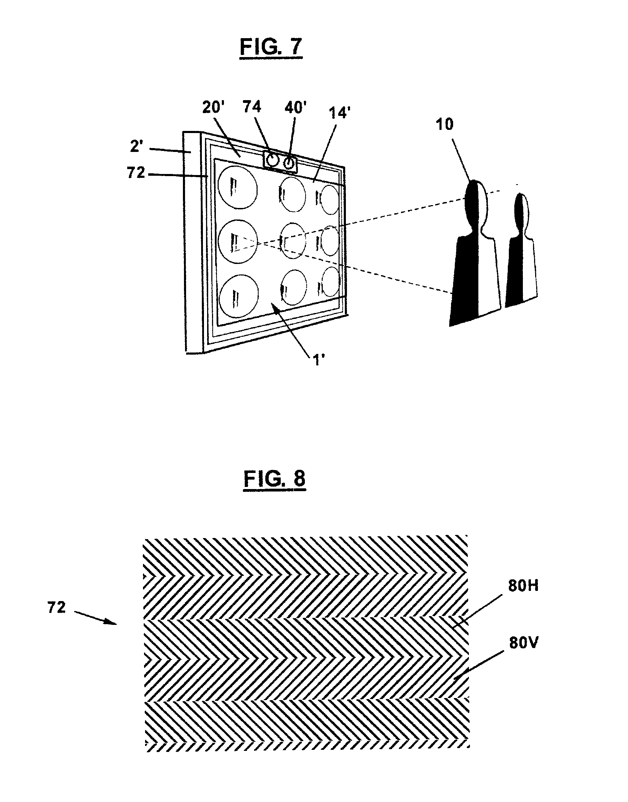

In Fig. 7., a second alternative embodiment of the autostereoscopic display element according to the present invention is shown. This embodiment is similar in its operation of the OASLM 20' to the above described arrangement, but a flat-panel display 2', displaying a spatially multiplexed stereoscopic image pair is used instead of a projector pair, and further an adaptive illumination system is included.

A polarising layer 72 comprising a striped pattern of alternate polarisation direction is located in front of the display 2" so that alternate rows of pixels are covered by strips of alternate polarisational direction. Consequently, even number row pixels emit horisontally polarised light towards the screen and odd number row pixels emit vertically polarised light towards the screen. Fig. 8 shows such a layer having strips 80H and 80V of horisontal and vertical polarising direction. A different pattern than a stripe pattern may be used, for example a checkerboard pattern, which will provide equal vertical and horisontal resolution of the images of the stereoscopic image pair, whereas the horisontal stripe pattern will provide full horisontal but half vertical resolution of each of the images, as compared to the display displaying a monoscopic, non-multiplexed image. However, the stripe pattern is more compatible easily with existing methods of coding stereoscopic images and may be easier to manufacture.

An alternative to the patterned polarizer is a structured OASLM having its structure matching and aligned with the spatial multiplexing pixel pattern of the display. For example, the OASLM may comprise striped electrodes on one or both glass plates, so that alternating rows of electrodes aligned with rows of lenss in the micro lens layer may be supplied with the operating voltage square wave having alternatingly reversed and non-reversed voltage polarisation. Using a structured OASLM aligned with a pattern of pixels of the display, enables the use of other types of OASLM's based on other modulation layers than liquid crystals, because in this case the domains in the modulating layer do not have to be selectively transparent to light of different polarisational directions, but may simply vary the transmission rate of transmitted light, polarised or unpolarised. Such a structured OASLM's modulation layer may include the use of the Franz-Keldysh effect or the Quantum confined Stark effect and may be dispersed within the photosensitive layer, so that one layer is both sensing and modulating light. Reference is made to US Patent 6,025,950, which is hereby incorporated in the present specification by reference.

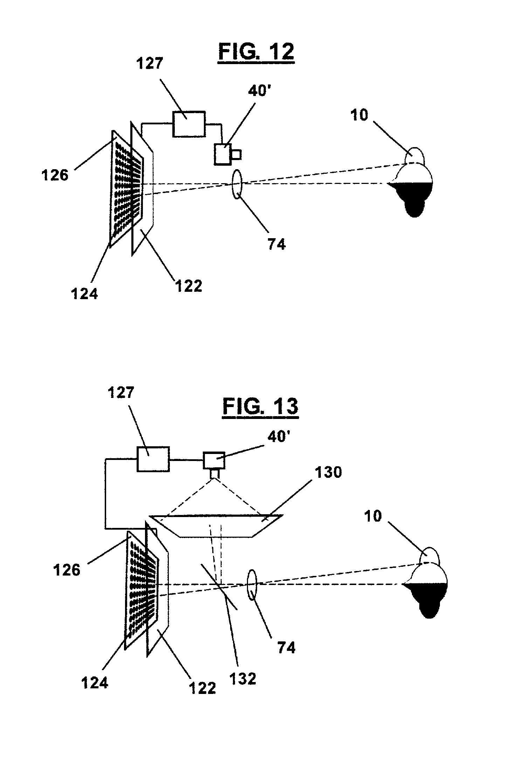

The illumination system is shown in greater details in fig. 12 and comprises an infrared camera 40', an image processing system 127 and an infrared projection system. The infrared projection system comprises an optical element 74, a monochrome liquid crystal spatial light modulator 122 and an illumination source alternately emitting light with horisontal and vertical polarisational direction at an alternation frequence of about 1000 Hz and synchronized with the operating cycle of the OASLM.

The illumination source comprises an array of infrared light emitting diodes 126, located outside of the focal plane of the lens. The LED array is constructed so, that even or odd rows are illuminated selectively. This may be achieved by wiring the LED's to the same voltage supply leads, but in alternate directions, so that when a positive voltage is applied to the LED array, even rows are illuminated, and when a negative voltage is applied, odd rows are illuminated. A polariser 124 is located in front of the LED array, with strips of alternating horisontal and vertical polarisational directions similar to that of fig 8, and aligned with the rows of LEDs, so that when even rows are illuminated, horisontally polarized light is emitted, and when odd rows are illuminated, vertically polarized light is emitted.

The camera continously captures infrared images of the observers, for example at a frame rate of 60 frames per second, and feed these to the image processing system. The image processing system tracks the individual observer, and continously synthesizes binary images of left half face image of the individual observer and output these to the spatial light modulator. Image processing based observer tracking is for example demonstrated in US Patent 6,069,649 to which reference is made and which is hereby incorporated in the present specification by reference. As the LED array emits light of alternating polarisational direction, patterns on the spatial light modulator forming normal and reversed images of these synthesized binary left half side face images wil alternate and be projected through the lens 74 towards the individual observer.

Hence, the individual observer will be illuminated by these alternating normal and reversed binary half face images, and when the camera and projector are properly aligned and their optical characteristics are appropriately adjusted by one another, the projection system will alternately illuminate the left half face of the individual observer and illuminate everything except the left half face, including the right half face. Consequently, the desired alternating left half face, right half face infrared illumination is achieved, and synchronized with the OASLM, the operating cycle illustrated in fig. 14, being identical to that of the above described first alternative embodiment.

The image processing system needs appropriate illuminated images of the individual observer, for example uniformly frontally illuminated. One way of obtaining this is to use a shutter speed in the camera long enough to cover at least two succeeding alternate normal and reversed images, for example 1/500 second, thereby performing a temporal integration of the reversed images, resulting in a uniformly frontal illuminated image, assuming that the individual observer is essentially not moving during the shutter time. However, In this embodiment, the shutter speed is selected to be equal to or less than one half period of the alternation cycle, so that only a normal or reversed image is captured at a time. The shutter operation is then synchronized with the illuminations systems alternation phase, so that separate succeeding images of normal and reversed illumination is obtained. A difference image is the calculated, each pixel value being given by the numerical difference between corresponding pixel values of the two captured reversely illuminated images.

This technique will likewise produce a uniformly frontally illuminated image, again assuming that the individual observer is not moving between alternation cycles. This technique has the advantage of cancelling out any light not originating from the illumination system, ensuring that the images are always captured in a well defined constant infrared illumination, which is an advantage for the image processing.

Further, the separate captured images of reversed illumination, may provide data for an automatic correlation of captured and projected images, enabling automatic compensation of geometric errors and inaccuracies due to parallax difference, alignment of camera and projector, difference in optical elements etc. A table of correlation parameters may be stored by the image processing system.

Another way of reducing parallax and alignment problems is to let the camera capture an image projected through the same lens as the projection system uses. This technique is illustrated in fig. 13. A half mirror 132 projects the images of the alternatingly illuminated individual observer onto a projection plate 130, and the infrared camera 40' is capturing an image of the projection plate.

With this availability of images always captured in a well defined constant infrared illumination, it is further possible to maintain a reference background image of the interiour in front of the display. The background image assists the image processing system in detecting and tracking the individual observer. The background image may be subtracted from the captured images, thereby cancelling reflections from fixed objects in the room such as walls, floor, furniture, etc., effectively isolating moving objects (and their shadows). This principle is well known for example in intruder detection systems.

The background image may be obtained by manual assistance, for example a pushbutton function activated when installing the screen and display, activated by the operator when the viewing area in front of the display is empty. Alternatively, it may be maintained automatically by the illumination system by median filtering images captured continously over long intervals, for example one image per hour. During such long intervals, the observers are assumed to be moving back and forth, thereby being cancelled out by the difference image function, and only the long time constant reflections such as from walls, furniture etc. will remain, providing the background reference image for the observer tracking function. Reference is made to US Patent 4,772,943 which US Patent is further hereby incorporated in the present specification by reference.

In a third alternative embodiment, similar to the above described second alternative embodiment, but capable of displaying temporarily multiplexed, or time division, steresocpic images, the patterned polarizer is replaced by a uniform polarizer of uniform polarising direction, and a large liquid crystal cell is located in front of it. The liquid crystal cell is capable of rotating the polarisational direction either approximately 0 degrees or approximately 90 degrees, and is synchronized with the alternation frequency of the displayed time division based stereoscopic images.

In a fourth alternative embodiment, a front projection screen is constructed, capable of displaying temporarily multiplexed, or time division based, stereoscopic images from a pair of front projectors. The arrangement resembles that of the above described third alternative embodiment, but the display is replaced by a reflector. A uniform polarizer and a liquid crystall cell are still located in front of it. In this arrangement, the liquid crystal cell is synchronized with the projector pairs' alternation frequency. The reflector must be spaced apart from the lens array layer, so that the projected spot of light emitted from the front projection system onto the reflector is not in focus, but is enlarged to approximately the same size as the lens elements of the lens array layer, to allow reflection of projection system light in any angle within the desired viewing angle. An infrared source synchronized with the operating cycle of the illumination system and the OASLM are located close to the projectors, to make the OASLM transparent to light in the direction of the projectors, so that projection light entering the lens is transmitted unobstructed to the reflector.

In a fifth alternative embodiment, the display is a color or monochrome electrically addressed LCD display, and the OASLM is integrated into the LCD display, by the inclusion of an extra photosensitive layer into the LCD. The impedance of the photosensitive layer masks out areas of each electrically addressed pixel, so that the OASLM works with the same liquid crystal layer as the display, hence only one liquid crystal layer is needed. The photosensitive layer may be transparent and located in front of the liquid crystal layer, or it may be opaque, i.e. having a high absorption rate, thereby allowing for high sensitivity, if located behind the liquid crystal layer. In the latter arrangement, a layer reflecting visible light but transmitting infrared light may be included inbetween the photosensitive and the liquid crystal layer. If a color LCD with dyes is used in the latter arrangement, dyes must be transparent to infrared light.

Although the present invention has been described above with reference to a number of presently prefered embodiments and also certain alternatives of the presently prefered embodiment of autostereoscopic display element or arrangement/system according to the present invention, the present invention is by no means limited to the above described embodiments or alternatives. The present invention is rather to be understood in accordance with the appending claims and the invention is further to be construed including modifications, alternatives etc. of the technique defined in the appending claims which modifications or amendments are to be considered obvious to a person having ordinary skill in the art.

## Claims

1. An autostereoscopic display system, comprising:
i) image generating means for the generation of a pair of orthogonally polarised images, the one image being vertically orientated with respect to its polarisation and the other image being horisontally orientated with respect to its polarisation, said images being transmitted from said image generating means along respective optical paths towards one or more observers for the illumination of at least a left hand part and a right hand part including the left eye and the right eye, respectively, of the head or heads of said one or more observer,
ii) an optically addressed spatial light modulator (OASLM) including a plurality of light transmission elements, each being individualy optically addressable, and each having an optical input and an optical output and being shiftable between a V-state and a H-state in which V-state the transmission of vertically polarised light from said optical input to said optical output is allowed and the transmission of horisontally polarised light from said input to said output is inhibited or blocked, and in which H-state the transmission of horisontally polarised light from said optical input to said optical output is allowed and the transmission of vertically polarised light from said optical input to said optical output is inhibited or blocked, each of said light transmission elements having an optical sensor for the shifting between said V-and H-states through exposure to light or, preferably, infrared radiation (IR), said OASLM being positioned in said optical paths from said image generating means to said one or more observers,
iii) an infrared illumination system for illuminating said one or more observers for illumination of at least the left hand part or the right hand part of the head of each of said one or more observers and in doing so, exposing a first part of said optical sensors of said plurality of light transmission elements of said OASLM to infrared radiation reflected from the left hand part or the right hand part of the head of each of said one or more observers, said optical sensors of said first part shifting their respective light transmission elements into allowing transmission of a first image of said pair of orthogonally polarised images and inhibiting or blocking for the transmission of the other or second image of said pair of orthogonal polarised images and said optical sensors not belonging to said first part shifting their respective light transmission elements into allowing transmission of the other or second image of said pair of orthogonally polarised images and inhibiting or blocking for the transmission of the first image of said pair of orthogonal polarised images through said remaining light transmission elements, and
iv) a refractive optical system, including at least one refractive optical element position in front of said OASLM between said OASLM and said one or more observers for establishing said optical parts.

2. The autostereoscopic display system according to claim 1, said at least one refractive optical element including a lens system, inlcuding at least one circular or cylindrical lens and/or including a multitude of refractive optical elements.

3. The autostereoscopic display system according to any of the claims 1 or 2, said OASLM being a structure including a plurality of discrete OASLM elements or alternatively being a continuous structure.

4. The autostereoscopic display system according to any of the claims 1-3, said image generating means being constituted by a CRT (cathode ray tube)- an LCD (liquid crystal display)- a DLP (digital light processing) projector, a film or slide projector or alternatively a CRT-, an LCD- or plasma display.

5. The autostereoscopic display system according to any of the claims 1-4, said image generating means being controlled by a clock generator generating a blanking period in which said image generating means be turned off, said optical sensors of said OASLM being controlled by said clock and preferably being enabled during said blanking period and being disabled outside said blanking period, so that no shifting of the state of said light transmission elements may occur outside said blanking period, and said infrared illumination system preferably being controlled by said clock and being turned on during said blanking period.

6. The autostereoscopic display system according to any of the claims 1-6, said system comprising two infrared illumination systems for illuminating said one or more observers from both sides for illuminating a respective head half part of each of said one or more observers and in doing so, addressing specific optical sensors of said plurality of light transmission elements of said OASLM.

7. The autostereoscopic display system according to any of the claims 1-6, said image generating means generating a spatially modulated stereoscopic image pair and including a patterned polariser with a pattern of areas of essential orthogonal polarisation direction located between the image generating means and the OASLM.

8. The autostereoscopic display system according to any of the claims 1-7, further including a polariser having a striped pattern, a checker board pattern or any other relevant pattern, or alternatively including striped or patterned electrodes integrated in said OASLM.

9. The autostereoscopic display system according to claim 6 and any of the claims 7-8 refering to claim 6, said two infrared elimination system being pulsed or temporarily modulated with different phases or frequency or alternatively having different peak wavelengths.

10. The autostereoscopic display system according to any of the claims 1-9 further including interference reducing means for reducing the interfering effect on said optical sensors of said light transmission elements from sources different from said infrared elimination system.

11. The autostereoscopic display system according to any of the claims 1-10 and comprising any of the features of the display system as herein before described and illustrated in the accompanying drawings.
